# EUROPEAN PATENT SPECIFICATION

(11) **EP 4 155 521 B1**
(45) Date of publication and mention of the grant of the patent: **25.06.2025**
(21) Application number: 22197878.6
(22) Date of filing: 26.09.2022
(51) Int. Cl.: F02C 7/32, F01D 15/10, F02C 7/36

(54) **AIRCRAFT POWER PLANT WITH A TRANSMISSION TO DRIVE AN ELECTRICAL MACHINE**
FLUGZEUGTRIEBWERK MIT EINEM GETRIEBE ZUM ANTRIEB EINER ELEKTRISCHEN MASCHINE
INSTALLATION MOTRICE D'AÉRONEF AVEC UNE TRANSMISSION POUR ENTRAÎNER UNE MACHINE ÉLECTRIQUE

(30) Priority: 24.09.2021 US 202117484579
(43) Date of publication of application: 29.03.2023
(73) Proprietor: PRATT & WHITNEY CANADA CORP., Longueuil, Québec J4G 1A1 (CA)
(72) Inventor: VALOIS, Patrick, (01BE5) Longueuil, J4G 1A1 (CA)
(74) Representative: Dehns

(56) References cited:
- EP-A1- 3 736 422
- EP-A1- 3 800 342
- EP-A1- 3 845 750
- WO-A1-2009/067048

## Description

### TECHNICAL FIELD

The application relates generally to aircraft engines and, more particularly, to gearboxes and transmissions used to drive accessories connected to aircraft engines.

### BACKGROUND

Aircraft engines, such as gas turbine engines, may have two spools, namely a low-pressure spool and a high-pressure spool, which are independently rotatable from one another. Accessories, such as generators for example, are typically driven by the high-pressure spool. In some operating conditions, the power extracted by the accessory driven by the high-pressure spool may be limited. Hence, improvements are sought.

EP 3 736 422 A1 discloses prior art systems and methods for transferring mechanical power in a turbine engine.

EP 3 845 750 A1 discloses a prior art turbofan engine with spool power extraction via multiple generators.

WO 2009/067048 A1 discloses a prior art gas turbine engine with a power transmission device for transmitting power from first and second turbine shafts to a power output shaft for driving auxiliary units.

EP 3 800 342 A1 discloses a prior art superposition gearbox for engine performance.

### SUMMARY

According to a first aspect of the present invention, there is provided an aircraft power plant as set forth in claim 1.

The aircraft power plant as defined above and described elsewhere herein may also include one or more of the following features.

In some embodiments, the coupling system includes: a first coupling device having a first engaged configuration and a first disengaged configuration, the first input engaged to the output via the first coupling device in the first engaged configuration and disengaged from the output in the first disengaged configuration, and a second coupling device having a second engaged configuration and a second disengaged configuration, the second input engaged to the output via the second coupling device in the second engaged configuration and disengaged from the output in the second disengaged configuration.

In some embodiments, one or both of the first coupling device and the second coupling device has at least one intermediary configuration in which an input of the one or both of the first coupling device and the second coupling device rotates at a different speed than an output of the one or both of the first coupling device and the second coupling device.

In some embodiments, the one or both of the first coupling device and the second coupling device is a viscous coupling device having two members rotatable one relative to the other, the two members spaced apart from one another by a gap filled with a fluid.

In some embodiments, an actuator is engaged to one of the two members, the actuator operable to move the one of the two members toward and away from the other of the two members to vary a dimension of the gap.

In some embodiments, the transmission includes: a first load path from the first input to the output via the first coupling device, the first load path including a first gear engaged to a first coupling input of the first coupling device, and a second gear engaging the output and engaged by a first coupling output of the first coupling device, and a second load path from the second input to the output via the second coupling device, the second load path including a third gear engaged to a second coupling input of the second coupling device, and the second gear engaging the output and engaged by a second coupling output of the second coupling device.

In some embodiments, the first coupling input is defined by a fourth gear meshed with the first gear, the first coupling output defined by a fifth gear meshed with the second gear, the fourth gear engaged to the fifth gear via a fluid received within a first gap defined between the fourth gear and the fifth gear, the second coupling input is defined by a sixth gear meshed with the third gear, the second coupling output defined by a seventh gear meshed with the second gear, the sixth gear engaged to the seventh gear via a fluid received within a second gap defined between the sixth gear and the seventh gear.

In some embodiments, the coupling system interconnects the output with the first input when an altitude of the aircraft power plant is below an altitude threshold.

In some embodiments, the coupling system interconnects the output with the second input when an altitude of the aircraft power plant is above an altitude threshold.

In some embodiments, a controller has a processing unit operatively connected to a computer-readable medium having instructions stored thereon executable by the processing unit for: receiving a signal from at least one sensor, the signal indicative of an operating condition of the aircraft power plant; based on the received signal, determining a configuration of the transmission, the configuration being one of: a first configuration in which the transmission drivingly engages the first input to the output while the second input is disengaged from the output, a second configuration in which the transmission drivingly engages the second input to the output while the first input is disengaged from the output, and a hybrid configuration in which both of the first input and the second input are drivingly engaged to the output through the transmission; and operating the transmission in the determined configuration.

In some embodiments, the signal is indicative of an altitude of the aircraft power plant, the determining of the configuration includes determining that the altitude is below an altitude threshold and the operating of the transmission includes operating the transmission in the first configuration.

In some embodiments, the signal is indicative of an altitude of the aircraft power plant, the determining of the configuration includes determining that the altitude is above an altitude threshold and the operating of the transmission includes operating the transmission in the second configuration.

In some embodiments, the determining of the configuration includes: determining that the configuration corresponds to the hybrid configuration; determining a power split between the high-pressure shaft and the low-pressure shaft as a function of the operating condition of the aircraft power plant; and driving the electrical machine per the determined power split.

In some embodiments, the determining of the power split includes determining the power split from a look-up table stored in the computer-readable medium.

According to a further aspect of the present invention, there is provided a method of driving an electrical machine with an aircraft power plant as set forth in claim 12.

The method as defined above and described elsewhere herein may also include one or more of the following steps and/or features.

In some embodiments, the determining that the portion of the torque requirement of the electrical machine to be provided by the one of the high-pressure spool and the low-pressure spool includes: determining that an entirety of the torque requirement is to be provided to the electrical machine by the one of the high-pressure spool and the low-pressure spool; and drivingly engaging the electrical machine to the one of the high-pressure spool and the low-pressure spool while the other of the high-pressure spool and the low-pressure spool is disengaged from the electrical machine.

In some embodiments, the determining that the portion of the torque requirement of the electrical machine to be provided by the one of the high-pressure spool and the low-pressure spool includes: determining that the torque requirement is to be provided to the electrical machine by both of the high-pressure spool and the low-pressure spool; and drivingly engaging both of the high-pressure spool and the low-pressure spool to the electrical machine.

In some embodiments, the drivingly engaging of both of the high-pressure spool and the low-pressure spool to the electrical machine includes: drivingly engaging the high-pressure spool to the electrical machine via a first coupling device; and drivingly engaging the low-pressure spool to the electrical machine via a second coupling device, wherein one or both of the first coupling device and the second coupling device has at least one intermediary configuration in which an input of the one or both of the first coupling device and the second coupling device rotates at a different speed than an output of the one or both of the first coupling device and the second coupling device.

In some embodiments, the signal is indicative of an altitude of the aircraft power plant, the determining of the portion of a torque requirement of the electrical machine to be provided by one of the high-pressure spool and the low-pressure spool as a function of the operating condition of the aircraft power plant includes: determining that the altitude is below an altitude threshold; and determining that no torque is to be provided by the low-pressure spool.

In some embodiments, the signal is indicative of an altitude of the aircraft power plant, the determining of the portion of a torque requirement of the electrical machine to be provided by one of the high-pressure spool and the low-pressure spool as a function of the operating condition of the aircraft power plant includes: determining that the altitude is above an altitude threshold; and determining that no torque is to be provided by the high-pressure spool.

### BRIEF DESCRIPTION OF THE DRAWINGS

Reference is now made to the accompanying figures in which:
Fig. 1 is a schematic cross-sectional view of an aircraft power plant depicted as a turboprop gas turbine engine in accordance with one embodiment;
Fig. 2 is an enlarged view of a portion of Fig. 1 illustrating a transmission of the aircraft power plant of Fig. 1;
Fig. 3 is a schematic cross-sectional view of an aircraft power plant depicted as a turboprop gas turbine engine in accordance with another embodiment;
Fig. 4 is a flowchart illustrating steps of a method of operating the power plants of Figs. 1 and 2; and
Fig. 5 is a schematic representation of a controller in accordance with one embodiment.

### DETAILED DESCRIPTION

In at least some of the figures that follow, some elements appear more than once (e.g. there may be two, three, etc. of a given part in a given embodiment). Accordingly, only a first instance of each given element may be labeled, to maintain clarity of the figures.

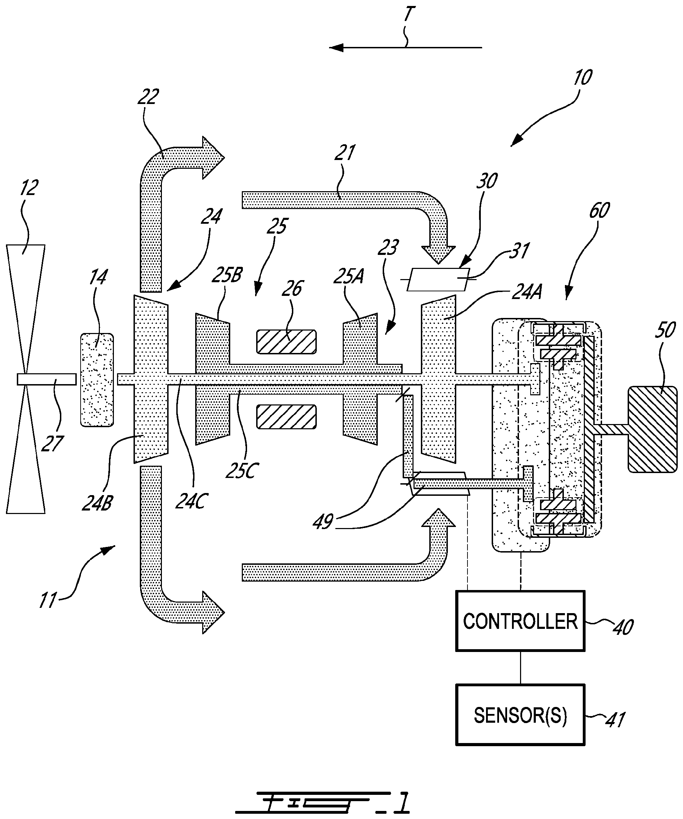

Referring to Fig. 1, an aircraft power plant is shown at 10. The aircraft power plant 10 is referred to herein below simply as "power plant 10" for the sake of conciseness. The power plant 10 includes a gas turbine engine 11. The gas turbine engine 11 is shown in Fig. 1 as being a turboprop gas turbine engine drivingly engaged to a propeller 12 via a reduction gearbox 14. It will be appreciated that the principles of the present disclosure may apply to any engine having two spools as will be explained below. These engines may include, for instance, turbofan and turboshaft.

The gas turbine engine 11 includes an inlet 21 at a rear of the gas turbine engine 11 relative to a direction of travel T of the power plant 10. The gas turbine engine 11 includes an exhaust 22 at a front of the power plant 10 relative to the direction of travel T. The gas turbine engine 11 is therefore a reverse-flow engine in that air flows from the inlet 21 to the exhaust 22 in an annular gas path 23 from the rear to the front in the same direction as the direction of travel T.

The gas turbine engine 11 includes a low-pressure (LP) spool 24 and a high-pressure (HP) spool 25. The term "spool" is herein intended to broadly refer to drivingly connected turbine and compressor rotors and is, thus, not limited to a compressor and turbine assembly on a single shaft. It also includes a rotary assembly with multiple shafts geared together. The LP spool 24 includes a LP compressor 24A, a LP or power turbine 24B, and a LP shaft 24C drivingly engaging the LP turbine 24B to the LP compressor 24A. The HP spool 25 includes a HP compressor 25A, a HP turbine 25B, and a HP shaft 25C drivingly engaging the HP turbine 25B to the HP compressor 25A. The gas turbine engine 11 includes a combustor 26 between the HP turbine 25B and the HP compressor 25A. In the embodiment shown, the HP shaft 25C is hollow and the LP shaft 24C extends within the HP shaft 25C. Other configurations are contemplated.

In use, air enters the gas turbine engine 11 via the inlet 21 and flows into the annular gas path 23 through the LP compressor 24A and through the HP compressor 25A located downstream of the LP compressor 24A relative to a direction of the flow into the annular gas path 23. The air, now compressed, is mixed with fuel into the combustor 26 and is ignited thereby generating combustion gases. The combustion gases flow out of the combustor 26 into the HP turbine 25B, which extracts energy from the combustion gases to drive the HP compressor 25A via the HP shaft 25C. The combustion gases then flow through the LP or power turbine 24B located downstream of the HP turbine 25B relative to the direction of the flow through the annular gas path 23. The LP turbine 24B extracts power from the combustion gases to drive the LP compressor 24A via the LP shaft 24C. The LP turbine 24B further drivingly engages the propeller 12 via the reduction gearbox 14. The reduction gearbox 14 drives the propeller 12 via an output shaft 27.

In the embodiment shown, the gas turbine engine 11 includes variable inlet guide vanes (VIGV) 30 located upstream of the LP compressor 24A relative to the flow in the annular gas path 23. The VIGV 30 includes airfoils 31 that are each pivotable about respective spanwise axes to orient the incoming flow from the inlet 21 toward the LP compressor 24A. In the present embodiment, the airfoils 31 extend in a direction being substantially axial relative to a central axis of the gas turbine engine 11. In some embodiments, the airfoils 31 may extend in a direction having a radial component relative to the central axis of the gas turbine engine 11. The VIGV 30 is operatively connected to a controller 40 of the aircraft power plant 10; the controller 40 operable to vary angles of attack defined between the incoming flow and the airfoils 31.

Still referring to Fig. 1, the aircraft power plant 10 is used to drive an accessory such as an electrical machine 50. Typically, the electrical machine 50 is driven solely by the HP spool 25. The electrical machine 50 may be used in an electric motor configuration to drive the HP spool 25 for starting the gas turbine engine 11. The electrical machine 50 may be used in a generator configuration to generate electrical power to be used by an aircraft equipped with the aircraft power plant 10.

It was observed that, when the electrical machine 50 is being used in the generator configuration, the power extracted by the electrical machine 50 driven by the HP spool 25 may be limited for operability reasons. For instance, higher loads on the HP compressor 25A may reduce its surge margin, which may be undesirable. Typically, when this situation occurs, a second generator driven by the LP spool 24 is being used. However, this adds complexity and weight to the power plant 10, which may be undesirable.

In the embodiment shown, the aircraft power plant 10 includes a transmission 60, which may also be referred to as a differential, used to transmit a rotational input from both of the HP shaft 25C and the LP shaft 24C to the electrical machine 50. Hence, if power extraction requirement for certain engine operating conditions makes the HP compressor 25A surge margin fall below the operability threshold, the transmission 60 is used to transmit power from the LP spool 24 to the electrical machine 50 used in the generator mode. Hence, the use of a second generator may be avoided.

In the embodiment shown, series of intermediary shafts 49 are used to connect the transmission 60 to the HP shaft 25C. It will be understood that any suitable connection may be used to drivingly engage the transmission 60 to the HP shaft 25. The intermediary shafts 49 may be drivingly engaged to one another using bevel gears, universal joints, or any other suitable means. One of the intermediary shafts 49 is located radially outside the annular gas path 23 relative to an axis of rotation of the HP and LP shafts 25C, 24C. Although said intermediary shafts 49 are shown as being connected at a rear of the HP shaft 25C, they may alternatively be connected at a front thereof. In the present case, the transmission 60 is driven by the LP shaft 24C directly. However, it will be understood that intermediary shaft may be used to connect the LP shaft 24C to the transmission 60.

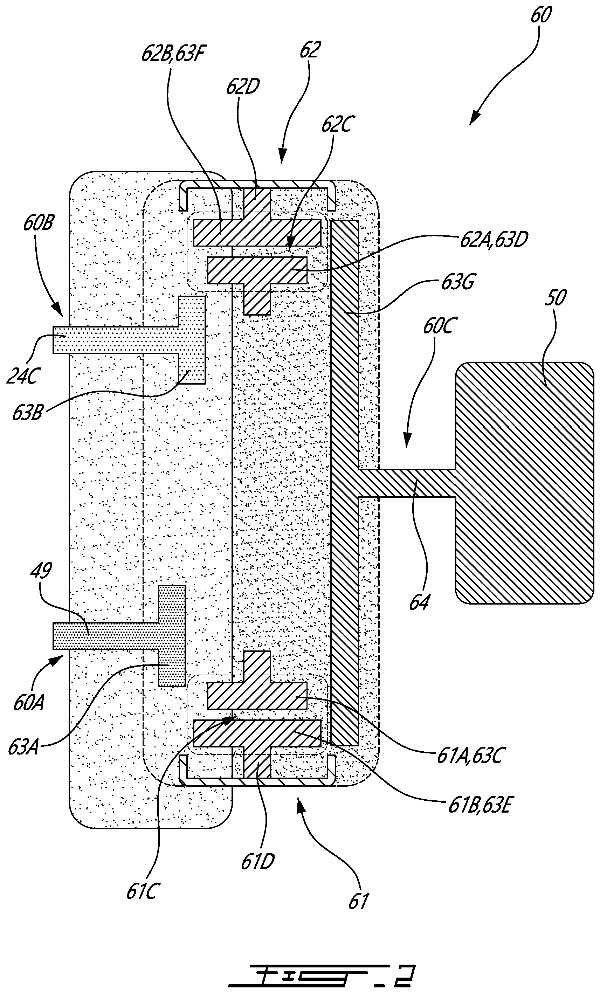

Referring now to Fig. 2, the transmission 60 is described in more detail. The transmission 60 has a first input 60A drivingly engaged by the HP shaft 25C, herein via the intermediary shafts 49. The transmission 60 has a second input 60B drivingly engaged by the LP shaft 24C. The transmission 60 has an output 60C drivingly engaging the electrical machine 50. The transmission 60 is operable in a plurality of configurations to select which of the LP and HP spools 24, 25, or a combination thereof, drives the electrical machine 50 as a function of operating conditions of the power plant 10. The transmission 60 includes a coupling system, which will be described below. The coupling system is used to selectively interconnect the output 60C with one of: the first input 60A, with the second input 60B disconnected from the output 60C; the second input 60B, with the first input 60A disconnected from the output 60C; and both of the first input 60A and the second input 60B.

The transmission 60 has a first configuration in which the transmission 60 drivingly engages the first input 60A to the output 60C while the second input 60B is disengaged from the output 60C. In the first configuration, solely the HP shaft 25C drives the electrical machine 50 and the LP shaft 24C is disengaged from the electrical machine 50. Hence, no power is extracted from the LP shaft 24C in the first configuration of the transmission 60. In some operating conditions, the gas turbine engine 11 may benefit from having higher loads extracted from the HP spool 25. For instance, at low altitude take-off during a hot day, higher loads on the HP spool 25 may reduce its rotational speed, which may avoid the HP spool 25 from reaching its speed limit. Hence, during these operating conditions, the LP spool 24 may be disengaged from the electrical machine 50 to maximize the load on the HP spool 25. During starting of the gas turbine engine 11, the electrical machine 50 is operated as an electrical motor and is coupled solely to the HP shaft 25C to accelerate the HP spool 25. Hence, during engine start-up, the LP spool 24 may be disengaged from the electrical machine 50.

The transmission 60 has a second configuration in which the transmission 60 drivingly engages the second input 60B to the output 60C while the first input 60A is disengaged from the output 60C. In the second configuration, solely the LP shaft 24C drives the electrical machine 50 and the HP shaft 25C is disengaged from the electrical machine 50. Hence, no power is extracted from the HP shaft 25C in the second configuration of the transmission 60. In certain operating conditions, the LP shaft 24C of the gas turbine engine 11 may have a fixed rotating speed that may benefit from having higher loads on the LP compressor 24C connected thereto. For instance, at high altitude during cruise, higher loading on the LP compressor 24C may result in the opening of the VIGV 30, which may allow more air mass flow in the gas turbine engine 11. This may result in the gas turbine engine 11 having higher output power capability. In such operating condition, the HP spool 25 may be decoupled from the electrical machine 50, leaving the entire load to the LP spool 24 to maximize engine available power and spare the surge margin of the HP compressor 25A. In these operating conditions, the LP compressor 24A may be less sensitive surge-margin-wise than the HP compressor 25A to accessory power extraction. That is, more power can be extracted from the LP spool 24 before the surge margin of the LP compressor 24A is affected as much as the surge margin of the HP compressor 25A would be for the same power extraction by the electrical machine 50.

The transmission 60 may have a hybrid configuration in which both of the first input 60A and the second input 60B are drivingly engaged to the output 60C through the transmission 60. In this hybrid configuration, both of the LP and HP spools 24, 25 provide power to the electrical machine 50. The hybrid configuration may be used to smoothly switch between the first and second configurations. This may allow the gas turbine engine 11 to run optimally from performance and operability standpoints. During engine operation, the controller 40 may receive data about engine inlet total pressure and total temperature and, from the received data, may determine an optimal split between the power extracted from the LP and HP spools 24, 25 to drive the electrical machine 50. When the total pressure and total temperature are above respective thresholds, more power may be extracted from the HP spool 25 than from the LP spool 24. When the total pressure and total temperature are below respective thresholds, more power may be extracted from the LP spool 24 than from the HP spool 25.

The electrical machine 50 may have a torque requirement for proper operation at a given operating condition. For instance, the torque requirement of the electrical machine 50 may be dictated by a power output required from the electrical machine 50 when operated as a generator. The transmission 60 may allow one or both of the HP and LP spools 25, 24 to fulfill the torque requirement of the electrical machine 50.

The transmission 60 may further be able to provide adequate speed ratios to cater to the difference between the rotational speeds of the HP and LP spools 25, 24 and the desired rotating speed of the electrical machine 50. Gears of varying diameters may be used for that purpose as will be described below.

Still referring to Fig. 2, the coupling system of the transmission 60 includes a first coupling device 61 and a second coupling device 62. The first coupling device 61 is used to transmit a rotational input from the HP shaft 25C to the electrical machine 50. The first coupling device 61 has a first engaged configuration and a first disengaged configuration. The first input 60A of the transmission 60 is engaged to the output 60C of the transmission 60 via the first coupling device 61 in the first engaged configuration and disengaged from the output 60C in the first disengaged configuration. Similarly, the second coupling device 62 having a second engaged configuration and a second disengaged configuration. The second input 60B of the transmission 60 is engaged to the output 60C of the transmission 60 via the second coupling device 62 in the second engaged configuration and disengaged from the output 60C in the second disengaged configuration.

The first coupling device 61 has a first coupling input 61A drivingly engaged by the first input 60A of the transmission 60, and has a first coupling output 61B drivingly engaging the output 60C of the transmission 60. Similarly, the second coupling device 62 has a second coupling input 62A drivingly engaged by the second input 60B of the transmission 60, and has a second coupling output 62B drivingly engaging the output 60C of the transmission 60. The first coupling input 61A is engaged to the first coupling output 61B in the first engaged configuration and disengaged from the first coupling output 61B in the first disengaged configuration. The second coupling input 62A is engaged to the second coupling output 62B in the second engaged configuration and disengaged from the second coupling output 62B in the second disengaged configuration.

The first and second coupling devices 61, 62 may be a clutches, a visco-couplers, and so on. The first and second coupling devices 61, 62 may allow slippage between their respective first and second coupling inputs 61A, 62A and first and second coupling outputs 61B, 62B. That is, in the first and second disengaged configurations, the first coupling input 61A and the second coupling input 62A may rotate while no torque is transferred to the first coupling output 61B and the second coupling output 62B. In the first and second engaged configurations, the first coupling input 61A may rotate at the same speed as the first coupling output 61B and the second coupling input 62A may rotate at the same speed as the second coupling output 62B. In the embodiment shown, the first and second coupling devices 61, 62 have an intermediary configuration in which the first coupling input 61A rotates at a different speed than the first coupling output 61A and in which the second coupling input 62A rotates at a different speed than the second coupling output 62B. In some embodiments, only one of the first and second coupling devices 61, 62 may have this intermediate configuration. Any suitable coupling devices that may allow slippage as described herein may be used without departing from the scope of the present disclosure. This intermediary configuration, allowing slippage between the respective inputs and outputs, may allow the driving of the electrical machine 50 with both of the HP and LP spools 25, 24 while avoiding the HP spool from being engaged to the LP spool, which would make the gas turbine engine 11 a single-spool engine, which may be undesirable in some operating conditions. However, in some other configurations, performance benefits may be achieved.

In the intermediate configuration of the first coupling device 61, a torque is transferred from the first coupling input 61A to the first coupling output 61B, but the transferred torque may be less than a torque received at the first coupling input 61A from the HP shaft 25C. Similarly, in the intermediate configuration of the second coupling device 62, a torque is transferred from the second coupling input 62A to the second coupling output 62B, but the transferred torque may be less than a torque received at the second coupling input 62A from the LP shaft 24C. Hence, the first and second coupling devices 61, 62 may be used to modulate the torque received from the HP and LP shafts 25C, 24C such that the torque transmitted via the first and second coupling devices 61, 62 corresponds to the torque requirement of the electrical machine 50 while extracting the most optimal power from the HP and LP shafts 25C, 24C to avoid surge margin or excessive rotating speeds issues as discussed above.

As shown in Fig. 2, the transmission 60 includes a first driving gear 63A drivingly engaged by the HP shaft 25C and a second driving gear 63B drivingly engaged by the LP shaft 24C. The first driving gear 63A is meshed with a first idler gear 63C that defines the first coupling input 61A of the first coupling device 61. The second driving gear 63B is meshed with a second idler gear 63D that defines the second coupling input 62A of the second coupling device 62. The first coupling output 61B is defined by a third idler gear 63E and the second coupling output 62B is defined by a fourth idler gear 63F.

The first idler gear 63C is drivingly engageable to the third idler gear 63E via a film 61C of a fluid located within a gap between the first idler gear 63C and the third idler gear 63E. Similarly, the second idler gear 63D is drivingly engageable to the fourth idler gear 63F via a film 62C of a fluid located within a gap between the second idler gear 63D and the fourth idler gear 63F. The films 61C, 62C may include a viscous fluid, such as oil. Distances between the first idler gear 63C and the third idler gear 63E and between the second idler gear 63D and the fourth idler gear 63F may be varied with first and second actuators 61D, 62D, which are herein engaged respectively to the third and fourth idler gears 63E, 63F although other configurations are contemplated. It will be appreciated that the film may be suitably contained between members secured to the gears for rotation with the gears. These members may include, for instance, discs, plates, and so on. A housing may be provided around the gears to contain the fluid within the gaps.

The actuators 61D, 62D may be operatively connected to the controller 40 to vary the distances between the gears. The torque is transferred via shearing stress of the viscous fluid located within the gaps between the gears. The smaller the distance, the greater the torque transferred via the first and second coupling devices 61, 62 up to a point where both gears of each pairs of the idler gears rotate at the same speed. When the distances are increased, the torque transferred decreases up to a point where no torque is transferred.

Both of the third and fourth idler gears 63E, 63F are meshed with a driven gear 63G that is drivingly engaged to the electrical machine 50 via an output shaft 64 of the transmission 60. Hence, the power extracted from the HP and LP shafts 25C, 24C may converge to the same driven gear 63G to drive the electrical machine 50. In the present embodiment, all of the gears are depicted as bevel gears. It will be appreciated that other configurations are contemplated without departing from the scope of the present disclosure. The diameters of the gears is selected to provide required speed ratios between the HP and LP shafts 25C, 24C and the output shaft 64 of the transmission 60.

The transmission 60 therefore includes a first load path and a second load path. The first load path extends from the first input 60A to the output 60C via the first coupling device 61. The first load path includes the first driving gear 63A engaged to the first coupling input 61A of the first coupling device 61 and the driven gear 63G engaging the output 60C of the transmission 60 and engaged by the first coupling output 61B of the first coupling device 61.

The second load path extends from the second input 60B of the transmission 60 to the output 60C via the second coupling device 62. The second load path includes the second driving gear 63B engaged to the second coupling input 62A of the second coupling device 62, and the driven gear 63G engaging the output 60C and engaged by the second coupling output 62B of the second coupling device 62.

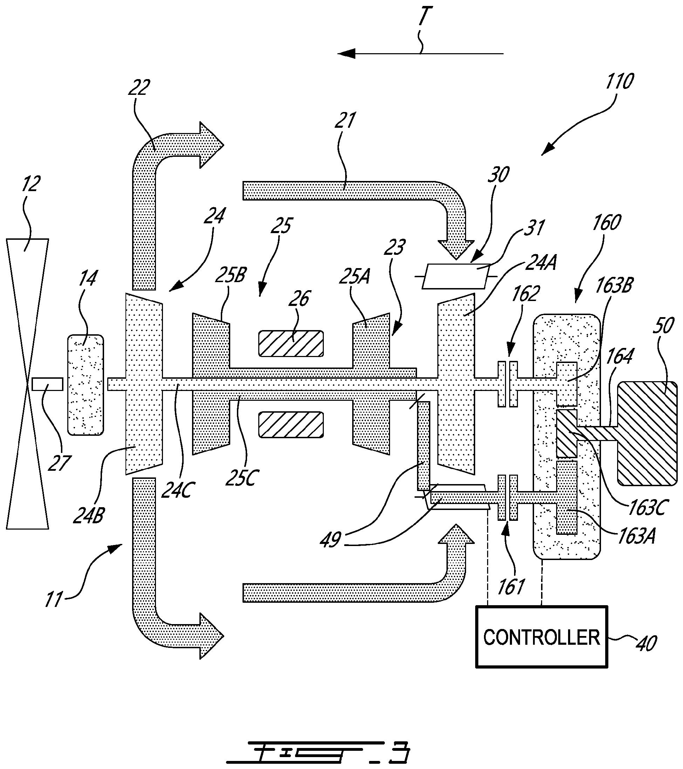

Referring now to Fig. 3, another embodiment of an aircraft power plant is shown at 110. For the sake of conciseness, only elements that differ from the aircraft power plant 10 described above are described below.

The aircraft power plant 110 has a transmission 160 that includes first and second clutches 161, 162 each operable in an engaged configuration and a disengaged configuration. The transmission 160 may be operatively connected to the controller 40 to control operation of the first and second clutches 161, 162. The first and second clutches 161, 162 may be dog clutches, viscous clutches, and so on. The first clutch 161 has an input drivingly engaged to the HP shaft 25C and an output drivingly engaging a first gear 163A. The second clutch 162 has an input drivingly engaged to the LP shaft 24C and an output drivingly engaging a second gear 163B. The first and second gears 163A, 163B are meshed with a third gear 163C, which is drivingly engaged to the electrical machine 50 via an output shaft 164 of the transmission 160. In use one or both of the first and second clutches 161, 162 may be in its engaged configuration to provide a rotational input to the electrical machine 50. The transmission 160 may be limited to having only one of the two spools 24, 25 engaged to the electrical machine 50 at a time.

The transmissions 60, 160 described herein may allow higher power extraction for a single generator and may void the possible addition of a second generator.

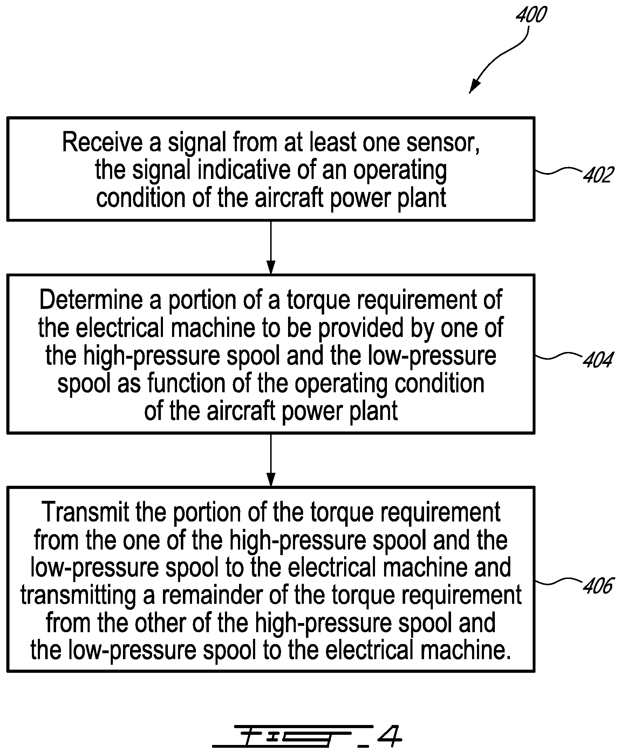

Referring now to Fig. 4, a method of driving the electrical machine is shown at 400. The method 400 includes receiving a signal from at least one sensor 41 (Fig. 1), the signal indicative of an operating condition of the aircraft power plant at 402. The method 400 includes determining a portion of a torque requirement of the electrical machine 50 to be provided by one of the high-pressure spool 25 and the low-pressure spool 24 as a function of the operating condition of the aircraft power plant at 404. The method 400 then includes transmitting the portion of the torque requirement from the one of the high-pressure spool 25 and the low-pressure spool 24 to the electrical machine 50 and transmitting a remainder of the torque requirement from the other of the high-pressure spool 25 and the low-pressure spool 24 to the electrical machine 50. In some embodiments, the remainder of the torque requirement may be zero such that all of the torque requirement is to be fulfilled by only one of the two spools 24, 25.

In the embodiment shown, the determining that the portion of the torque requirement of the electrical machine 50 to be provided by the one of the high-pressure spool 25 and the low-pressure spool 24 may include: determining that an entirety of the torque requirement is to be provided to the electrical machine 50 by the one of the high-pressure spool 25 and the low-pressure spool 24; and drivingly engaging the electrical machine 50 to the one of the high-pressure spool 25 and the low-pressure spool 24 while the other of the high-pressure spool 25 and the low-pressure spool 24 is disengaged from the electrical machine 50.

The determining that the portion of the torque requirement of the electrical machine to be provided by the one of the high-pressure spool 25 and the low-pressure spool 24 may include: determining that the torque requirement is to be provided to the electrical machine 50 by both of the high-pressure spool 25 and the low-pressure spool 24; and drivingly engaging both of the high-pressure spool 25 and the low-pressure spool 24 to the electrical machine 50. This may be done by drivingly engaging the high-pressure spool 25 to the electrical machine 50 via the first coupling device 61; and drivingly engaging the low-pressure spool 24 to the electrical machine 50 via the second coupling device 62. As explained above, one or both of the first coupling device 61 and the second coupling device 62 may have at least one intermediary configuration in which an input of the one or both of the first coupling device 61 and the second coupling device 62 rotates at a different speed than an output of the one or both of the first coupling device 61 and the second coupling device 62.

The signal may be indicative of an altitude of the aircraft power plant 10. In such a case, the method 400 may include: determining that the altitude is below an altitude threshold; and determining that no torque is to be provided by the low-pressure spool 24. Or, the method 400 may include determining that the altitude is above an altitude threshold; and determining that no torque is to be provided by the high-pressure spool 25.

The method 400 may include determining an optimal configuration corresponding to one of the first, second, and hybrid configurations of the transmission 60 based on the received signal; and operating the transmission 60 in the determined optimal configuration. In some cases, the signal may be indicative of an altitude of the aircraft power plant 10 and the determining of the optimal configuration includes determining that the altitude is below an altitude threshold and the operating of the transmission may include operating the transmission in the first configuration in which in which the transmission 60 drivingly engages the first input 60A to the output 60C while the second input 60B is disengaged from the output 60C and in which the LP shaft 24C is disengaged from the electrical machine 50. In some cases, the determining of the optimal configuration may include determining that the altitude is above an altitude threshold and the operating of the transmission includes operating the transmission in the second configuration in which in which the transmission 60 drivingly engages the second input 60B to the output 60C while the first input 60A is disengaged from the output 60C and in which the HP shaft 25C is disengaged from the electrical machine 50.

The signal indicative of the altitude may be provided by the sensor 41, which may be a total temperature sensor, a temperature sensor, an altimeter, a total pressure sensor, and/or a pressure sensor. Other parameters may be used to determine which of the two spools is to drive the electrical machine 50. An engine inlet temperature signal from a temperature sensor can be used in conjunction with the aforementioned pressure signal. A compressor discharge / combustor cavity pressure (P3) signal could also be used in conjunction with engine rotating speed sensor and other engine temperature and pressure sensors as an indication of compressor surge margin status and could drive a change in the spool driving the electrical machine 50.

In some other cases, the determining of the optimal configuration includes: determining that the optimal configuration corresponds to the hybrid configuration. The method 400 may then include determining an optimal power split between the high-pressure shaft 25C and the low-pressure shaft 24C as a function of the operating condition of the aircraft power plant 10; and driving the electrical machine 50 per the determined optimal power split. The determining of the optimal power split includes determining the optimal power split from a look-up table stored in a computer-readable medium of the controller 40.

The power split may, for instance, require that torque requirement of the electrical machine 50 be divided in half between the two spools 24, 25. Hence, 50% of the torque requirement may be provided by the HP spool 25 and 50% of the torque requirement may be provided by the LP spool 24. In some cases, a 70/30 split is desirable. The controller 40 may be able to compute the optimal power split.

It is understood that, in some cases, a total torque of the two spools 24, 25 may be greater than the torque requirement of the electrical machine 50. In this case, the first and second coupling devices 61, 62 may suitably reduce the torque they receive from the respective spools 24, 25 to ensure that the proper torque is provided to the electrical machine 50. The controller 40 may control the first and second coupling devices 61, 62 to adjust or modulate the torque that is transmitted from the spools 24, 25 to the output 60C of the transmission 60. This may include controlling a dimension of the gaps, and hence a thickness of the films 61C, 62C by powering the actuators 61D, 62D.

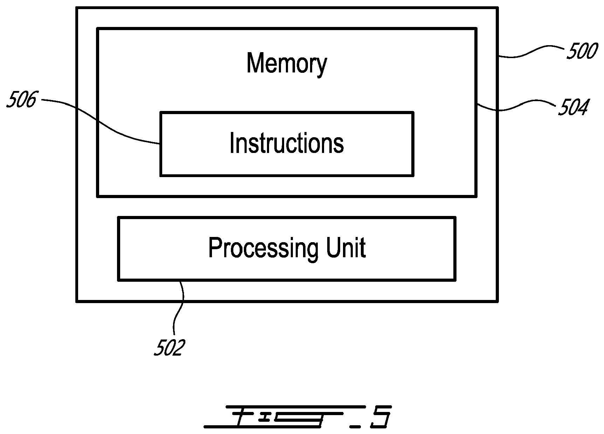

With reference to Fig. 5, an example of a computing device 500 is illustrated. For simplicity only one computing device 500 is shown but the system may include more computing devices 500 operable to exchange data. The computing devices 500 may be the same or different types of devices. The controller 40 may be implemented with one or more computing devices 500. Note that the controller 40 can be implemented as part of a full-authority digital engine controls (FADEC) or other similar device, including electronic engine control (EEC), engine control unit (ECU), electronic propeller control, propeller control unit, and the like. In some embodiments, the controller 40 is implemented as a Flight Data Acquisition Storage and Transmission system, such as a FAST^{™} system. The controller 40 may be implemented in part in the FAST^{™} system and in part in the EEC. Other embodiments may also apply.

The computing device 500 comprises a processing unit 502 and a memory 504 which has stored therein computer-executable instructions 506. The processing unit 502 may comprise any suitable devices configured to implement the method 400 such that instructions 506, when executed by the computing device 500 or other programmable apparatus, may cause the functions/acts/steps performed as part of the method 400 as described herein to be executed. The processing unit 502 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 504 may comprise any suitable known or other machine-readable storage medium. The memory 504 may comprise non-transitory computer readable storage medium, for example, but not limited to, an electronic, magnetic, optical, electromagnetic, infrared, or semiconductor system, apparatus, or device, or any suitable combination of the foregoing. The memory 504 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 504 may comprise any storage means (e.g., devices) suitable for retrievably storing machine-readable instructions 506 executable by processing unit 502.

The methods and systems for driving an electrical machine described herein may be implemented in a high level procedural or object oriented programming or scripting language, or a combination thereof, to communicate with or assist in the operation of a computer system, for example the computing device 500. Alternatively, the methods and systems for driving an electrical machine may be implemented in assembly or machine language. The language may be a compiled or interpreted language. Program code for implementing the methods and systems for driving an electrical machine may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for driving an electrical machine may also be considered to be implemented by way of a non-transitory computer-readable storage medium having a computer program stored thereon. The computer program may comprise computer-readable instructions which cause a computer, or more specifically the processing unit 502 of the computing device 500, to operate in a specific and predefined manner to perform the functions described herein, for example those described in the method 400.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described in this document provide non-limiting examples of possible implementations of the present technology. Upon review of the present disclosure, a person of ordinary skill in the art will recognize that changes may be made to the embodiments described herein without departing from the scope of the present invention as defined in the appended claims. For example, the transmissions described herein may be used with any engine on which accessory load is extracted from more than one spool. Yet further modifications could be implemented by a person of ordinary skill in the art in view of the present disclosure, which modifications would be within the scope of the present technology.

## Claims

1. An aircraft power plant (10) comprising:
a high-pressure spool (25) including a high-pressure compressor (25A), a high-pressure turbine (25B), and a high-pressure shaft (25C) drivingly engaging the high-pressure turbine (25B) to the high-pressure compressor (25A);
a low-pressure spool (24) including a low-pressure compressor (24A), a low-pressure turbine (24B), and a low-pressure shaft (24C) drivingly engaging the low-pressure turbine (24B) to the low-pressure compressor (24A);
an electrical machine (50) operable as a generator; and
a transmission (60) having a first input (60A) drivingly engaged by the high-pressure shaft (25C), a second input (60B) drivingly engaged by the low-pressure shaft (24C), and an output (60C) drivingly engaging the electrical machine (50), the transmission (60) having a coupling system selectively interconnecting the output (60C) with one of:
the first input (60A), with the second input (60B) disconnected from the output (60C);
the second input (60B), with the first input (60A) disconnected from the output (60C); and
both of the first input (60A) and the second input (60B).

2. The aircraft power plant (10) of claim 1, wherein the coupling system includes:
a first coupling device (61) having a first engaged configuration and a first disengaged configuration, the first input (60A) engaged to the output (60C) via the first coupling device (61) in the first engaged configuration and disengaged from the output (60C) in the first disengaged configuration, and
a second coupling device (62) having a second engaged configuration and a second disengaged configuration, the second input (60B) engaged to the output (60C) via the second coupling device (62) in the second engaged configuration and disengaged from the output (60C) in the second disengaged configuration.

3. The aircraft power plant (10) of claim 2, wherein one or both of the first coupling device (61) and the second coupling device (62) has at least one intermediary configuration in which an input (61A, 62A) of the one or both of the first coupling device (61) and the second coupling device (62) rotates at a different speed than an output (61B, 62B) of the one or both of the first coupling device (61) and the second coupling device (62).

4. The aircraft power plant (10) of claim 2 or 3, wherein the one or both of the first coupling device (61) and the second coupling device (62) is a viscous coupling device having two members (63C, 63E, 63D, 63F) rotatable one relative to the other, the two members (63C, 63E, 63D, 63F) spaced apart from one another by a gap filled with a fluid (61C, 62C), and optionally comprising an actuator (61D, 62D) engaged to one of the two members (63E, 63F), the actuator (61D, 62D) operable to move the one of the two members (63E, 63F) toward and away from the other of the two members (63C, 63D) to vary a dimension of the gap.

5. The aircraft power plant (10) of any one of claims 2 to 4, wherein the transmission (60) includes:
a first load path from the first input (60A) to the output (60C) via the first coupling device (61), the first load path including a first gear (63A) engaged to a first coupling input (61A) of the first coupling device (61), and a second gear (63B) engaging the output (60C) and engaged by a first coupling output (61B) of the first coupling device (61), and
a second load path from the second input (60B) to the output (60C) via the second coupling device (62), the second load path including a third gear (63C) engaged to a second coupling input (62A) of the second coupling device (62), and the second gear (63B) engaging the output (60C) and engaged by a second coupling output (62B) of the second coupling device (62).

6. The aircraft power plant (10) of claim 5, wherein the first coupling input (61A) is defined by a fourth gear (63C) meshed with the first gear (63A), the first coupling output (61B) defined by a fifth gear (63E) meshed with the second gear (63B), the fourth gear (63C) engaged to the fifth gear (63E) via a fluid (61C) received within a first gap defined between the fourth gear (63C) and the fifth gear (63E), the second coupling input (62A) is defined by a sixth gear (63D) meshed with the third gear (63C), the second coupling output (62B) defined by a seventh gear (63F) meshed with the second gear (63B), the sixth gear (63D) engaged to the seventh gear (63F) via a fluid (62C) received within a second gap defined between the sixth gear (63D) and the seventh gear (63F).

7. The aircraft power plant (10) of any one of the preceding claims, wherein the coupling system interconnects the output with: the first input (60A) when an altitude of the aircraft power plant (10) is below an altitude threshold; and/or the second input (60B) when the altitude of the aircraft power plant (10) is above an altitude threshold.

8. The aircraft power plant (10) of any one of the preceding claims, comprising a controller (40) having a processing unit (502) operatively connected to a computer-readable medium having instructions stored thereon executable by the processing unit (502) for:
receiving a signal from at least one sensor (41), the signal indicative of an operating condition of the aircraft power plant (10);
based on the received signal, determining a configuration of the transmission (60), the configuration being one of:
a first configuration in which the transmission (60) drivingly engages the first input (60A) to the output (60C) while the second input (60B) is disengaged from the output (60C),
a second configuration in which the transmission (60) drivingly engages the second input (60B) to the output (60C) while the first input (60A) is disengaged from the output (60C), and
a hybrid configuration in which both of the first input (60A) and the second input (60B) are drivingly engaged to the output (60C) through the transmission (60); and
operating the transmission (60) in the determined configuration.

9. The aircraft power plant (10) of claim 8, wherein the signal is indicative of an altitude of the aircraft power plant (10), the determining of the configuration includes:
determining that the altitude is below an altitude threshold and the operating of the transmission (60) includes operating the transmission (60) in the first configuration;
and/or determining that the altitude is above the altitude threshold and the operating of the transmission (60) includes operating the transmission (60) in the second configuration.

10. The aircraft power plant (10) of claim 8 or 9, wherein the determining of the configuration includes:
determining that the configuration corresponds to the hybrid configuration;
determining a power split between the high-pressure shaft (25C) and the low-pressure shaft (24C) as a function of the operating condition of the aircraft power plant (10); and
driving the electrical machine (50) per the determined power split.

11. The aircraft power plant (10) of claim 10, wherein the determining of the power split includes determining the power split from a look-up table stored in the computer-readable medium.

12. A method of driving an electrical machine (50) with the aircraft power plant (10)of any of claims 1 to 7, the method comprising:
receiving a signal from at least one sensor (41), the signal indicative of an operating condition of the aircraft power plant (10);
determining a portion of a torque requirement of the electrical machine (50) to be provided by one of the high-pressure spool (25) and the low-pressure spool (24) as a function of the operating condition of the aircraft power plant (10); and
transmitting the portion of the torque requirement from the one of the high-pressure spool (25) and the low-pressure spool (24) to the electrical machine (50) and transmitting a remainder of the torque requirement from the other of the high-pressure spool (25) and the low-pressure spool (24) to the electrical machine (50).

13. The method of claim 12, wherein the determining that the portion of the torque requirement of the electrical machine (50) to be provided by the one of the high-pressure spool (25) and the low-pressure spool (24) includes:
determining that an entirety of the torque requirement is to be provided to the electrical machine (50) by the one of the high-pressure spool (25) and the low-pressure spool (24), and drivingly engaging the electrical machine (50) to the one of the high-pressure spool (25) and the low-pressure spool (24) while the other of the high-pressure spool (25) and the low-pressure spool (24) is disengaged from the electrical machine (50); or
determining that the torque requirement is to be provided to the electrical machine (50) by both of the high-pressure spool (25) and the low-pressure spool (24), and drivingly engaging both of the high-pressure spool (25) and the low-pressure spool (24) to the electrical machine (50).

14. The method of claim 13, wherein the drivingly engaging of both of the high-pressure spool (25) and the low-pressure spool (24) to the electrical machine (50) includes:
drivingly engaging the high-pressure spool (25) to the electrical machine (50) via a first coupling device (61); and
drivingly engaging the low-pressure spool (24) to the electrical machine (50) via a second coupling device (62),
wherein one or both of the first coupling device (61) and the second coupling device (62) has at least one intermediary configuration in which an input (61A, 62A) of the one or both of the first coupling device (61) and the second coupling device (62) rotates at a different speed than an output (61B, 62B) of the one or both of the first coupling device (61) and the second coupling device (62).

15. The method of any one of claims 12 to 14, wherein the signal is indicative of an altitude of the aircraft power plant (10), the determining of the portion of a torque requirement of the electrical machine (50) to be provided by one of the high-pressure spool (25) and the low-pressure spool (24) as a function of the operating condition of the aircraft power plant (10) includes:
determining that the altitude is below an altitude threshold, and determining that
no torque is to be provided by the low-pressure spool (24); or determining that the altitude is above the altitude threshold, and determining that
no torque is to be provided by the high-pressure spool (25).

## Patentansprüche

1. Flugzeugtriebwerk (10), umfassend:
eine Hochdruckläufergruppe (25), die einen Hochdruckverdichter (25A), eine Hochdruckturbine (25B) und eine Hochdruckwelle (25C) beinhaltet, die die Hochdruckturbine (25B) antriebsmäßig mit dem Hochdruckverdichter (25A) in Eingriff bringt;
eine Niederdruckläufergruppe (24), die einen Niederdruckverdichter (24A), eine Niederdruckturbine (24B) und eine Niederdruckwelle (24C) beinhaltet, die die Niederdruckturbine (24B) antriebsmäßig mit dem Niederdruckverdichter (24A) in Eingriff bringt;
eine elektrische Maschine (50), die als Generator betreibbar ist; und
ein Getriebe (60), das einen ersten Eingang (60A), der durch die Hochdruckwelle (25C) antriebsmäßig in Eingriff genommen wird, einen zweiten Eingang (60B), der durch die Niederdruckwelle (24C) antriebsmäßig in Eingriff genommen wird, und einen Ausgang (60C), der die elektrischen Maschine (50) antriebsmäßig in Eingriff nimmt, aufweist, wobei das Getriebe (60) ein Kopplungssystem aufweist, das den Ausgang (60C) wahlweise mit einem der Folgenden verbindet:
dem ersten Eingang (60A), wobei der zweite Eingang (60B) vom Ausgang (60C) getrennt ist;
dem zweiten Eingang (60B), wobei der erste Eingang (60A) vom Ausgang (60C) getrennt ist; und
sowohl dem ersten Eingang (60A) als auch dem zweiten Eingang (60B) .

2. Flugzeugtriebwerk (10) nach Anspruch 1, wobei das Kopplungssystem Folgendes beinhaltet:
eine erste Kopplungsvorrichtung (61), die eine erste in Eingriff gebrachte Konfiguration und eine erste gelöste Konfiguration aufweist, wobei der erste Eingang (60A) in der ersten in Eingriff gebrachten Konfiguration über die erste Kopplungsvorrichtung (61) mit dem Ausgang (60C) in Eingriff gebracht ist und in der ersten gelösten Konfiguration vom Ausgang (60C) gelöst ist, und eine zweite Kopplungsvorrichtung (62), die eine zweite in Eingriff gebrachte Konfiguration und eine zweite gelöste Konfiguration aufweist, wobei der zweite Eingang (60B) in der zweiten in Eingriff gebrachten Konfiguration über die zweite Kopplungsvorrichtung (62) mit dem Ausgang (60C) in Eingriff gebracht ist und in der zweiten gelösten Konfiguration vom Ausgang (60C) gelöst ist.

3. Flugzeugtriebwerk (10) nach Anspruch 2, wobei eine oder beide der ersten Kopplungsvorrichtung (61) und der zweiten Kopplungsvorrichtung (62) mindestens eine Zwischenkonfiguration aufweisen, in der ein Eingang (61A, 62A) der einen oder beiden der ersten Kopplungsvorrichtung (61) und der zweiten Kopplungsvorrichtung (62) mit einer anderen Drehzahl dreht als ein Ausgang (61B, 62B) der einen oder beiden der ersten Kopplungsvorrichtung (61) und der zweiten Kopplungsvorrichtung (62) .

4. Flugzeugtriebwerk (10) nach Anspruch 2 oder 3, wobei die eine oder beide der ersten Kopplungsvorrichtung (61) und der zweiten Kopplungsvorrichtung (62) eine visköse Kopplungsvorrichtung ist, die zwei relativ zueinander drehbare Elemente (63C, 63E, 63D, 63F) aufweist, wobei die zwei Elemente (63C, 63E, 63D, 63F) durch einen mit einem Fluid (61C, 62C) gefüllten Spalt voneinander beabstandet sind, und optional einen Aktuator (61D, 62D) umfassend, der mit einem der zwei Elemente (63E, 63F) in Eingriff steht, wobei der Aktuator (61D, 62D) dazu betreibbar ist, das eine der zwei Elemente (63E, 63F) auf das andere der zwei Elemente (63C, 63D) zu und von diesem weg zu bewegen, um eine Abmessung des Spalts zu variieren.

5. Flugzeugtriebwerk (10) nach einem der Ansprüche 2 bis 4, wobei das Getriebe (60) Folgendes beinhaltet:
einen ersten Lastweg vom ersten Eingang (60A) zum Ausgang (60C) über die erste Kopplungsvorrichtung (61), wobei der erste Lastweg ein erstes Zahnrad (63A), das mit einem ersten Kopplungseingang (61A) der ersten Kopplungsvorrichtung (61) in Eingriff steht, und ein zweites Zahnrad (63B), das den Ausgang (60C) in Eingriff nimmt und durch einen ersten Kopplungsausgang (61B) der ersten Kopplungsvorrichtung (61) in Eingriff genommen wird, beinhaltet und
einen zweiten Lastweg vom zweiten Eingang (60B) zum Ausgang (60C) über die zweite Kopplungsvorrichtung (62), wobei der zweite Lastweg ein drittes Zahnrad (63C), das mit einem zweiten Kopplungseingang (62A) der zweiten Kopplungsvorrichtung (62) in Eingriff steht, und das zweite Zahnrad (63B), das den Ausgang (60C) in Eingriff nimmt und durch einen zweiten Kopplungsausgang (62B) der zweiten Kopplungsvorrichtung (62) in Eingriff genommen wird, beinhaltet.

6. Flugzeugtriebwerk (10) nach Anspruch 5, wobei der erste Kopplungseingang (61A) durch ein viertes Zahnrad (63C) definiert ist, das mit dem ersten Zahnrad (63A) kämmt, der erste Kopplungsausgang (61B) durch ein fünftes Zahnrad (63E) definiert ist, das mit dem zweiten Zahnrad (63B) kämmt, das vierte Zahnrad (63C) mit dem fünften Zahnrad (63E) über ein Fluid (61C) in Eingriff steht, das innerhalb eines ersten Spalts, der zwischen dem vierten Zahnrad (63C) und dem fünften Zahnrad (63E) definiert ist, aufgenommen ist, der zweite Kopplungseingang (62A) durch ein sechstes Zahnrad (63D) definiert ist, das mit dem dritten Zahnrad (63C) kämmt, der zweite Kopplungsausgang (62B) durch ein siebtes Zahnrad (63F) definiert ist, das mit dem zweiten Zahnrad (63B) kämmt, wobei das sechste Zahnrad (63D) mit dem siebten Zahnrad (63F) über ein Fluid (62C) in Eingriff steht, das innerhalb eines zweiten Spalts, der zwischen dem sechsten Zahnrad (63D) und dem siebten Zahnrad (63F) definiert ist, aufgenommen ist.

7. Flugzeugtriebwerk (10) nach einem der vorhergehenden Ansprüche, wobei das Kopplungssystem den Ausgang mit Folgenden verbindet: dem ersten Eingang (60A), wenn eine Höhe des Flugzeugtriebwerks (10) unter einem Höhenschwellenwert liegt; und/oder dem zweiten Eingang (60B), wenn die Höhe des Flugzeugtriebwerks (10) über einem Höhenschwellenwert liegt.

8. Flugzeugtriebwerk (10) nach einem der vorhergehenden Ansprüche, umfassend eine Steuerung (40), die eine Verarbeitungseinheit (502) aufweist, die mit einem computerlesbaren Medium wirkverbunden ist, das darauf gespeicherte Anweisungen aufweist, die von der Verarbeitungseinheit (502) zu Folgendem ausführbar sind:
Empfangen eines Signals von mindestens einem Sensor (41), wobei das Signal einen Betriebszustand des Flugzeugtriebwerks (10) angibt;
Bestimmen einer Konfiguration des Getriebes (60) auf der Grundlage des empfangenen Signals, wobei die Konfiguration eine der Folgenden ist:
eine erste Konfiguration, in der das Getriebe (60) den ersten Eingang (60A) antriebsmäßig mit dem Ausgang (60C) in Eingriff bringt, während der zweite Eingang (60B) vom Ausgang (60C) gelöst ist,
eine zweite Konfiguration, in der das Getriebe (60) den zweiten Eingang (60B) antriebsmäßig mit dem Ausgang (60C) in Eingriff bringt, während der erste Eingang (60A) vom Ausgang (60C) gelöst ist, und
eine hybride Konfiguration, in der sowohl der erste Eingang (60A) als auch der zweite Eingang (60B) durch das Getriebe (60) antriebsmäßig mit dem Ausgang (60C) in Eingriff stehen; und
Betreiben des Getriebes (60) in der bestimmten Konfiguration.

9. Flugzeugtriebwerk (10) nach Anspruch 8, wobei das Signal eine Höhe des Flugzeugtriebwerks (10) angibt und das Bestimmen der Konfiguration Folgendes beinhaltet: Bestimmen, dass die Höhe unter einem Höhenschwellenwert liegt und das Betreiben des Getriebes (60) Betreiben des Getriebes (60) in der ersten Konfiguration beinhaltet; und/oder Bestimmen, dass die Höhe über dem Höhenschwellenwert liegt und das Betreiben des Getriebes (60) Betreiben des Getriebes (60) in der zweiten Konfiguration beinhaltet.

10. Flugzeugtriebwerk (10) nach Anspruch 8 oder 9, wobei das Bestimmen der Konfiguration Folgendes beinhaltet:
Bestimmen, dass die Konfiguration der hybriden Konfiguration entspricht;
Bestimmen einer Leistungsaufteilung zwischen der Hochdruckwelle (25C) und der Niederdruckwelle (24C) in Abhängigkeit vom Betriebszustand des Flugzeugtriebwerks (10); und
Antreiben der elektrischen Maschine (50) gemäß der bestimmten Leistungsaufteilung.

11. Flugzeugtriebwerk (10) nach Anspruch 10, wobei das Bestimmen der Leistungsaufteilung Bestimmen der Leistungsaufteilung aus einer Nachschlagetabelle beinhaltet, die auf dem computerlesbaren Medium gespeichert ist.

12. Verfahren zum Antreiben einer elektrischen Maschine (50) mit dem Flugzeugtriebwerk (10) nach einem der Ansprüche 1 bis 7, wobei das Verfahren Folgendes umfasst:
Empfangen eines Signals von mindestens einem Sensor (41), wobei das Signal einen Betriebszustand des Flugzeugtriebwerks (10) angibt;
Bestimmen eines Teils eines Drehmomentbedarfs der elektrischen Maschine (50), der von einer der Hochdruckläufergruppe (25) und der Niederdruckläufergruppe (24) in Abhängigkeit vom Betriebszustand des Flugzeugtriebwerks (10) bereitzustellen ist; und
Übertragen des Teils des Drehmomentbedarfs von der einen der Hochdruckläufergruppe (25) und der Niederdruckläufergruppe (24) an die elektrische Maschine (50) und Übertragen eines Rests des Drehmomentbedarfs von der anderen der Hochdruckläufergruppe (25) und der Niederdruckläufergruppe (24) an die elektrische Maschine (50).

13. Verfahren nach Anspruch 12, wobei das Bestimmen, dass der Teil des Drehmomentbedarfs der elektrischen Maschine (50), der von der einen der Hochdruckläufergruppe (25) und der Niederdruckläufergruppe (24) bereitzustellen ist, Folgendes beinhaltet:
Bestimmen, dass eine Gesamtheit des Drehmomentbedarfs von der einen der Hochdruckläufergruppe (25) und der Niederdruckläufergruppe (24) an die elektrische Maschine (50) bereitzustellen ist, und antriebsmäßiges Ineingriffbringen der elektrischen Maschine (50) mit der einen der Hochdruckläufergruppe (25) und der Niederdruckläufergruppe (24), während die andere der Hochdruckläufergruppe (25) und der Niederdruckläufergruppe (24) von der elektrischen Maschine (50) gelöst ist; oder
Bestimmen, dass der Drehmomentbedarf sowohl von der Hochdruckläufergruppe (25) als auch von der Niederdruckläufergruppe (24) an die elektrische Maschine (50) bereitzustellen ist, und antriebsmäßiges Ineingriffbringen sowohl der Hochdruckläufergruppe (25) als auch der Niederdruckläufergruppe (24) mit der elektrischen Maschine (50).

14. Verfahren nach Anspruch 13, wobei das antriebsmäßige Ineingriffbringen sowohl der Hochdruckläufergruppe (25) als auch der Niederdruckläufergruppe (24) mit der elektrischen Maschine (50) Folgendes beinhaltet:
antriebsmäßiges Ineingriffbringen der Hochdruckläufergruppe (25) mit der elektrischen Maschine (50) über eine erste Kopplungsvorrichtung (61); und
antriebsmäßiges Ineingriffbringen der Niederdruckläufergruppe (24) mit der elektrischen Maschine (50) über eine zweite Kopplungsvorrichtung (62),
wobei eine oder beide der ersten Kopplungsvorrichtung (61) und der zweiten Kopplungsvorrichtung (62) mindestens eine Zwischenkonfiguration aufweisen, in der ein Eingang (61A, 62A) der einen oder beiden der ersten Kopplungsvorrichtung (61) und der zweiten Kopplungsvorrichtung (62) mit einer anderen Drehzahl dreht als ein Ausgang (61B, 62B) der einen oder beiden der ersten Kopplungsvorrichtung (61) und der zweiten Kopplungsvorrichtung (62) .

15. Verfahren nach einem der Ansprüche 12 bis 14, wobei das Signal eine Flughöhe des Flugzeugtriebwerks (10) angibt, wobei das Bestimmen des Teils eines Drehmomentbedarfs der elektrischen Maschine (50), der von einer der Hochdruckläufergruppe (25) und der Niederdruckläufergruppe (24) in Abhängigkeit vom Betriebszustand des Flugzeugtriebwerks (10) bereitzustellen ist, Folgendes beinhaltet:
Bestimmen, dass die Höhe unter einem Höhenschwellenwert liegt, und Bestimmen, dass kein Drehmoment von der Niederdruckläufergruppe (24) bereitzustellen ist; oder
Bestimmen, dass die Höhe über dem Höhenschwellenwert liegt, und Bestimmen, dass kein Drehmoment von der Hochdruckläufergruppe (25) bereitzustellen ist.

## Revendications

1. Installation motrice d'aéronef (10) comprenant :
un tiroir haute pression (25) comprenant un compresseur haute pression (25A), une turbine haute pression (25B) et un arbre haute pression (25C) mettant en prise par entraînement la turbine haute pression (25B) avec le compresseur haute pression (25A) ;
un tiroir basse pression (24) comprenant un compresseur basse pression (24A), une turbine basse pression (24B) et un arbre basse pression (24C) mettant en prise par entraînement la turbine basse pression (24B) avec le compresseur basse pression (24A) ;
une machine électrique (50) servant de générateur ; et
une transmission (60) comportant une première entrée (60A) mise en prise par entraînement par l'arbre haute pression (25C), une seconde entrée (60B) mise en prise par entraînement par l'arbre basse pression (24C) et une sortie (60C) en prise par entraînement avec la machine électrique (50), la transmission (60) comportant un système d'accouplement interconnectant sélectivement la sortie (60C) avec l'un des éléments suivants :
la première entrée (60A), la seconde entrée (60B) étant déconnectée de la sortie (60C) ;
la seconde entrée (60B), la première entrée (60A) étant déconnectée de la sortie (60C) ; et
à la fois la première entrée (60A) et la seconde entrée (60B).

2. Installation motrice d'aéronef (10) selon la revendication 1, dans laquelle le système d'accouplement comprend :
un premier dispositif d'accouplement (61) ayant une première configuration en prise et une première configuration libérée, la première entrée (60A) étant en prise avec la sortie (60C) via le premier dispositif d'accouplement (61) dans la première configuration en prise et libérée de la sortie (60C) dans la première configuration libérée, et
un second dispositif d'accouplement (62) ayant une seconde configuration en prise et une seconde configuration libérée, la seconde entrée (60B) étant en prise avec la sortie (60C) via le second dispositif d'accouplement (62) dans la seconde configuration en prise et libérée de la sortie (60C) dans la seconde configuration libérée.

3. Installation motrice d'aéronef (10) selon la revendication 2, dans laquelle l'un ou les deux du premier dispositif d'accouplement (61) et du second dispositif d'accouplement (62) ont au moins une configuration intermédiaire dans laquelle une entrée (61A, 62A) de l'un ou des deux du premier dispositif d'accouplement (61) et du second dispositif d'accouplement (62) tourne à une vitesse différente de celle d'une sortie (61B, 62B) de l'un ou des deux du premier dispositif d'accouplement (61) et du second dispositif d'accouplement (62).

4. Installation motrice d'aéronef (10) selon la revendication 2 ou 3, dans laquelle l'un ou les deux du premier dispositif d'accouplement (61) et du second dispositif d'accouplement (62) sont un dispositif d'accouplement visqueux comportant deux éléments (63C, 63E, 63D, 63F) rotatifs l'un par rapport à l'autre, les deux éléments (63C, 63E, 63D, 63F) étant espacés l'un de l'autre par un espace rempli d'un fluide (61C, 62C), et comprenant éventuellement un actionneur (61D, 62D) en prise avec l'un des deux éléments (63E, 63F), l'actionneur (61D, 62D) permettant de rapprocher et d'éloigner l'un des deux éléments (63E, 63F) de l'autre des deux éléments (63C, 63D) afin de modifier une dimension de l'espace.

5. Installation motrice d'aéronef (10) selon l'une quelconque des revendications 2 à 4, dans laquelle la transmission (60) comprend :
un premier chemin de charge allant de la première entrée (60A) à la sortie (60C) via le premier dispositif d'accouplement (61), le premier chemin de charge comprenant un premier engrenage (63A) en prise avec une première entrée d'accouplement (61A) du premier dispositif d'accouplement (61), et un deuxième engrenage (63B) en prise avec la sortie (60C) et mis en prise par une première sortie d'accouplement (61B) du premier dispositif d'accouplement (61), et
un second chemin de charge allant de la seconde entrée (60B) à la sortie (60C) via le second dispositif d'accouplement (62), le second chemin de charge comprenant un troisième engrenage (63C) en prise avec une seconde entrée d'accouplement (62A) du second dispositif d'accouplement (62), et le deuxième engrenage (63B) en prise avec la sortie (60C) et mis en prise par une seconde sortie d'accouplement (62B) du second dispositif d'accouplement (62).

6. Installation motrice d'aéronef (10) selon la revendication 5, dans laquelle la première entrée d'accouplement (61A) est définie par un quatrième engrenage (63C) engrené avec le premier engrenage (63A), la première sortie d'accouplement (61B) est définie par un cinquième engrenage (63E) engrené avec le deuxième engrenage (63B), le quatrième engrenage (63C) étant en prise avec le cinquième engrenage (63E) via un fluide (61C) reçu dans un premier espace défini entre le quatrième engrenage (63C) et le cinquième engrenage (63E), la seconde entrée d'accouplement (62A) est définie par un sixième engrenage (63D) engrené avec le troisième engrenage (63C), la seconde sortie d'accouplement (62B) est définie par un septième engrenage (63F) engrené avec le deuxième engrenage (63B), le sixième engrenage (63D) étant en prise avec le septième engrenage (63F) via un fluide (62C) reçu dans un second espace défini entre le sixième engrenage (63D) et le septième engrenage (63F).

7. Installation motrice d'aéronef (10) selon l'une quelconque des revendications précédentes, dans laquelle le système d'accouplement interconnecte la sortie avec : la première entrée (60A) lorsque l'altitude de l'installation motrice d'aéronef (10) est inférieure à un seuil d'altitude ; et/ou la seconde entrée (60B) lorsque l'altitude de l'installation motrice d'aéronef (10) est supérieure à un seuil d'altitude.

8. Installation motrice d'aéronef (10) selon l'une quelconque des revendications précédentes, comprenant un dispositif de commande (40) doté d'une unité de traitement (502) reliée de manière opérationnelle à un support lisible par ordinateur sur lequel sont stockées des instructions exécutables par l'unité de traitement (502) pour :
la réception d'un signal provenant d'au moins un capteur (41), le signal indiquant un état de fonctionnement de l'installation motrice d'aéronef (10) ;
sur la base du signal reçu, déterminer une configuration de la transmission (60), la configuration étant l'une des suivantes : une première configuration dans laquelle la transmission (60) met en prise par entraînement la première entrée (60A) avec la sortie (60C) tandis que la seconde entrée (60B) est libérée de la sortie (60C),
une seconde configuration dans laquelle la transmission (60) met en prise par entraînement la seconde entrée (60A) avec la sortie (60C) tandis que la première entrée (60B) est libérée de la sortie (60C), et
une configuration hybride dans laquelle la première entrée (60A) et la seconde entrée (60B) sont toutes deux en prise par entraînement avec la sortie (60C) par l'intermédiaire de la transmission (60) ; et
faire fonctionner la transmission (60) dans la configuration déterminée.

9. Installation motrice d'aéronef (10) selon la revendication 8, dans laquelle le signal indique l'altitude de l'installation motrice d'aéronef (10), la détermination de la configuration comprenant les étapes consistant à : déterminer que l'altitude est inférieure à un seuil d'altitude et que le fonctionnement de la transmission (60) comprend le fonctionnement de la transmission (60) dans la première configuration ; et/ou déterminer que l'altitude est supérieure au seuil d'altitude et que le fonctionnement de la transmission (60) comprend le fonctionnement de la transmission (60) dans la seconde configuration.

10. Installation motrice d'aéronef (10) selon la revendication 8 ou 9, dans laquelle la détermination de la configuration comprend les étapes consistant à :
déterminer que la configuration correspond à la configuration hybride ;
déterminer une répartition de puissance entre l'arbre haute pression (25C) et l'arbre basse pression (24C) en fonction de l'état de fonctionnement de l'installation motrice d'aéronef (10) ; et
entraîner la machine électrique (50) selon la répartition de puissance déterminée.

11. Installation motrice d'aéronef (10) selon la revendication 10, dans laquelle la détermination de la répartition de puissance comprend la détermination de la répartition de puissance à partir d'une table de consultation stockée dans le support lisible par ordinateur.

12. Procédé d'entraînement d'une machine électrique (50) avec l'installation motrice d'aéronef (10) selon l'une quelconque des revendications 1 à 7, le procédé comprenant :
la réception d'un signal provenant d'au moins un capteur (41), le signal indiquant un état de fonctionnement de l'installation motrice d'aéronef (10) ;
la détermination d'une partie d'une demande de couple de la machine électrique (50) à fournir par l'un du tiroir haute pression (25) et du tiroir basse pression (24) en fonction de l'état de fonctionnement de l'installation motrice d'aéronef (10) ; et
la transmission de la partie de la demande de couple de l'un du tiroir haute pression (25) et du tiroir basse pression (24) à la machine électrique (50) et la transmission du reste de la demande de couple de l'autre du tiroir haute pression (25) et du tiroir basse pression (24) à la machine électrique (50).

13. Procédé selon la revendication 12, dans lequel la détermination de la partie de la demande de couple de la machine électrique (50) devant être fournie par l'un du tiroir haute pression (25) et du tiroir basse pression (24) comprend :
la détermination du fait que la totalité de la demande de couple doit être fournie à la machine électrique (50) par l'un du tiroir haute pression (25) et du tiroir basse pression (24), et la mise en prise par entraînement de la machine électrique (50) avec l'un du tiroir haute pression (25) et du tiroir basse pression (24) tandis que l'autre du tiroir haute pression (25) et du tiroir basse pression (24) est libéré de la machine électrique (50) ; ou
la détermination du fait que la demande de couple doit être fournie à la machine électrique (50) à la fois par le tiroir haute pression (25) et le tiroir basse pression (24), et la mise en prise par entraînement à la fois du tiroir haute pression (25) et du tiroir basse pression (24) avec la machine électrique (50).

14. Procédé selon la revendication 13, dans lequel la mise en prise par entraînement à la fois du tiroir haute pression (25) et du tiroir basse pression (24) avec la machine électrique (50) comprend :
la mise en prise par entraînement du tiroir haute pression (25) avec la machine électrique (50) via un premier dispositif d'accouplement (61) ; et
la mise en prise par entraînement du tiroir basse pression (24) avec la machine électrique (50) via un second dispositif d'accouplement (62),
dans lequel l'un ou les deux du premier dispositif d'accouplement (61) et du second dispositif d'accouplement (62) ont au moins une configuration intermédiaire dans laquelle une entrée (61A, 62A) de l'un ou des deux du premier dispositif d'accouplement (61) et du second dispositif d'accouplement (62) tourne à une vitesse différente de celle d'une sortie (61B, 62B) de l'un ou des deux du premier dispositif d'accouplement (61) et du second dispositif d'accouplement (62).

15. Procédé selon l'une quelconque des revendications 12 à 14, dans lequel le signal indique l'altitude de l'installation motrice d'aéronef (10), la détermination de la partie d'une demande de couple de la machine électrique (50) à fournir par l'un du tiroir haute pression (25) et du tiroir basse pression (24) en fonction de l'état de fonctionnement de l'installation motrice d'aéronef (10) comprenant :
la détermination du fait que l'altitude est inférieure à un seuil d'altitude et la détermination du fait qu'aucun couple ne doit être fourni par le tiroir basse pression (24) ; ou
la détermination du fait que l'altitude est supérieure à un seuil d'altitude et la détermination du fait qu'aucun couple ne doit être fourni par le tiroir haute pression (25).
